Europäisches Patentamt

European Patent Office

Office européen des brevets

(11) Veröffentlichungsnummer: **0 348 356**
**A1**

## (12) EUROPÄISCHE PATENTANMELDUNG

(21) Anmeldenummer: **89810474.0**

(22) Anmeldetag: **20.06.89**

(51) Int. Cl.⁴: **C 09 J 7/02**
**B 32 B 7/06**
**// C09J7/04**

(30) Priorität: **22.06.88 CH 2372/88**

(43) Veröffentlichungstag der Anmeldung:
**27.12.89 Patentblatt 89/52**

(84) Benannte Vertragsstaaten:
**AT CH DE FR IT LI**

(71) Anmelder: **HOPPE + PARTNER**
**Vorstadt 26A**
**CH-6301 Zug (CH)**

(72) Erfinder: **Hoppe, Willy**
**Eichstrasse 18**
**CH-6330 Cham (CH)**

(54) **Haftsysteme.**

(57) Eine beidseitig haftende Gewebe- oder Kunststoffmatte wird so konfektioniert, dass sie als Gebrauchsgegenstand überall, je nach Bedarf, verwendet werden kann.

EP 0 348 356 A1

**Beschreibung**

## Haftsysteme

Die Erfindung betrifft ein Haftsystem, welches aus einer beidseitig haftenden Gewebe- oder Kunststoffmatte hergestellt wird und zu jeder beliebigen Form konfektioniert wird, so dass es als Gebrauchsgegenstand für Büro, Haushalt, do-it-jourself, Spielzeugindustrie, Sport-und Veranstaltungsgegenstände verwendet werden kann.

Die Erfindung wird nachstehend anhand von Ausführungsbeispielen näher erläutert.

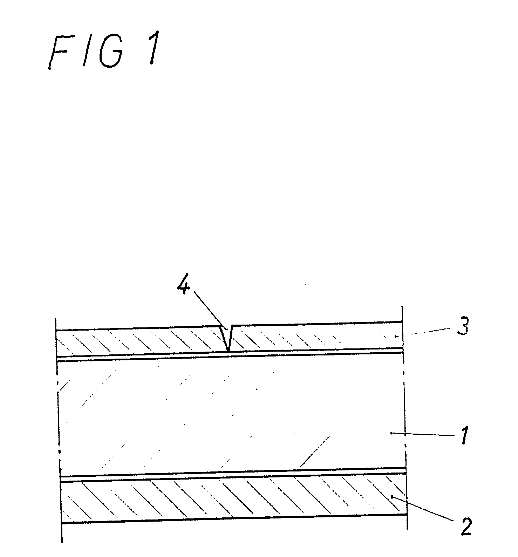

FIG. 1 zeigt im Querschnitt den Aufbau des Haftsystems. Die Unterseite der Haftmatte 1 ist auf ein haftabstossendes Trägermaterial 2 aufgelegt. Die Oberseite ist durch eine Deckfolie 3 geschützt, welche vorgeritzt 4 ist, so dass das Entfernen derselben einfach vor sich gehen kann.

**Patentansprüche**

1. Haftsystem, insbesondere zur Fixierung von entsprechenden Materialien an Gebäuden, Gegenständen oder Lebewesen, **dadurch gekennzeichnet**, dass das Haftsystem durch ihre Flexibilität in jeder Richtung den Vorteil hat, dass es auch auf unebenen Flächen gut haftet.

2. Element für ein Haftsystem nach Anspruch 1, **dadurch gekennzeichnet**, dass das Haftsystem von allen Materialien gut abgelöst werden kann, ohne dass dieselben beschädigt werden (z.B. Papier, Foto, Tapeten etc.).

3. Element für ein Haftsystem nach einem oder mehreren der vorstehenden Ansprüche, dadurch gekennzeichnet, dass das Haftsysteme mehrfach verwendbar ist, d.h. nach dem Ablösen kann es an anderer Stelle wieder angebracht werden.

4. Element für ein Haftsystem nach einem oder mehreren der vorstehenden Ansprüche, **dadurch gekennzeichnet**, dass das Haftsystem nach dem Ablösen keine sichtbaren Spuren auf dem Untergrund hinterlässt.

5. Element für ein Haftsystem nach einem oder mehreren der vorstehenden Ansprüche, **dadurch gekennzeichnet**, dass für die Fixierung entsprechender Materialien Einrichtungen wie Nägel, Magnete, Klebbänder, Leim etc. überflüssig sind.

# FIG 1

| | **EINSCHLÄGIGE DOKUMENTE** | | EP 89810474.0 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl.X) 5 |
|---|---|---|---|
| A | <u>DE - A1 - 2 404 682</u><br>(WILHELM JACKSTÄDT)<br> * Claim 1; Fig. 2 *<br>-- | 1 | C 09 J 7/02<br>B 32 B 7/06<br>//C 09 J 7/04 |
| A | <u>DE - A1 - 3 419 621</u><br>(BAYOUM)<br> * Claims 1,8,9 *<br>-- | 1 | |
| A | <u>DE - A - 1 594 075</u><br>(DOW CORNING)<br> * Claims 1,8,13 *<br>---- | 1 | |

RECHERCHIERTE
SACHGEBIETE (Int. Cl.X) 5

C 09 J
B 32 B

Der vorliegende Recherchenbericht wurde für alle Patentansprüche erstellt.

| Recherchenort | Abschlußdatum der Recherche | Prüfer |
|---|---|---|
| WIEN | 19-10-1989 | BÖHM |